# EUROPEAN PATENT SPECIFICATION

(11) **EP 2 494 843 B1**
(45) Date of publication and mention of the grant of the patent: **11.12.2019**
(21) Application number: 09748752.4
(22) Date of filing: 28.10.2009
(51) Int. Cl.: H04B 7/155, H04B 7/26, H04W 84/00, H04W 84/04, H04W 36/08, H04W 92/20

(54) **RELAYED COMMUNICATIONS IN MOBILE ENVIRONMENT**
RELAISKOMMUNIKATION IN EINER MOBILEN UMGEBUNG
COMMUNICATIONS RELAYÉES DANS UN ENVIRONNEMENT MOBILE

(43) Date of publication of application: 05.09.2012
(73) Proprietor: Nokia Solutions and Networks Oy, 02610 Espoo (FI)
(72) Inventor: VAN PHAN, Vinh, FI-90100 Oulu (FI); YU, Ling, FI-90650 Oulu (FI); HORNEMAN, Kari Veikko, FI-90800 Oulu (FI); VIHRIALA, Jaakko Eino Ilmari, FI-90800 Oulu (FI); KIISKI, Matti Tapani, FI-90460 Oulunsalo (FI); PIIRAINEN, Olli Juhani, FI-90100 Oulu (FI); VAINIKKA, Markku Juha, FI-90810 Kiviniemi (FI); HOOLI, Kari Juhani, FI-90540 Oulu (FI)
(74) Representative: Nokia EPO representatives
(86) International application number: PCT/EP2009/064224
(87) International publication number: WO 2011/050840

(56) References cited:
- EP-A1- 1 401 229
- WO-A1-2007/149025
- WO-A2-2007/146404
- US-A1- 2006 030 311
- US-A1- 2008 125 125

## Description

### Field

The invention relates to the field of cellular radio telecommunications and, particularly, to methods by a network element, by a mobile relay base station and corresponding apparatuses for relayed communications in a mobile environment.

### Background

With the ever increasing demand for increasing data rates and higher quality services in the world of mobile communications comes ever increasing demand for better performance of cellular network infrastructures. People use their mobile equipment with support for high data rate services while they are at work, at home, and/or while traveling on a mass transportation vehicle, e.g. bus, train, and ship. Such a mass transportation vehicle may travel at a speed of up to 100 m/s, and a huge number of communicating mobile devices in the vehicle traveling at the same speed sets high demands for network operators, because the users wish to preserve their high data rate connections regardless of the speed of the vehicle. Long-term evolution (LTE) of the 3^{rd} generation mobile communication system standardized within 3GPP (3^{rd} Generation Partnership Project) has introduced a relayed extension to cellular network infrastructure. Relaying links between user terminals and conventional base stations through relaying base stations improves capacity, coverage, and data rates. Relay base stations with multi-antenna arrays are also used to improve the performance of the cellular network. However, even the relayed extension as such may not be sufficient to meet the demand of the customers.

US 2006/030311 discloses a handoff management system that maximizes the communications capacity available from terrestrial air-to-ground cellular networks, while also integrating communications capabilities from satellite air-to-ground cellular networks and terrestrial cellular communications networks. The communications capacity is maximized by dynamically allocating communications from the aircraft over multiple communications channels to multiple cells of the terrestrial air-to-ground cellular network, and to satellite air-to-ground cellular networks and terrestrial mobile networks. This approach effectively provides an increase in the call handling capacity available to any aircraft and permits a gradual transition of communications from one cell to the next cell, rather than requiring an abrupt handover of all traffic from the aircraft from one cell to the next cell.

WO 2007/149025 discloses a system for maintaining prefix consistency in dynamic (splitting and merging) moving networks and reducing the negative consequences of splits and mergers. According to an example, it discloses a first mobile router, MR, connectable to a first moving network associated to a home agent, HA. The first moving network comprises at least a second MR, wherein each of the MRs is adapted to have a relation with said HA and to be assigned a first set of network prefixes identifying the first moving network, the first MR comprises means for determining that the first moving network is split into a second and a third moving network such that the first MR belongs to the second moving network, means for transmitting a request to said HA to be reassigned the first set of network prefixes, and means for being re-assigned the first set of network prefixes if local connectivity between the first MR and all other MRs that are assigned the first set of network prefixes is verified.

### Brief description

The invention is defined by the independent claims. Embodiments of the invention are defined in the dependent claims.

### List of drawings

Embodiments of the present invention are described below, by way of example only, with reference to the accompanying drawings, in which
Figure 1 illustrates a communication environment to which embodiments of the invention may be applied;
Figure 2 is a flow diagram illustrating a process for configuring mobile relay base station according to an embodiment of the invention;
Figure 3 is a signaling diagram illustrating establishment and operation of a mobile relay backhaul context according to an embodiment of the invention;
Figure 4 illustrates an exemplary block diagram of an apparatus according to an embodiment of the invention; and
Figure 5 illustrates an exemplary block diagram of another apparatus according to an embodiment of the invention.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

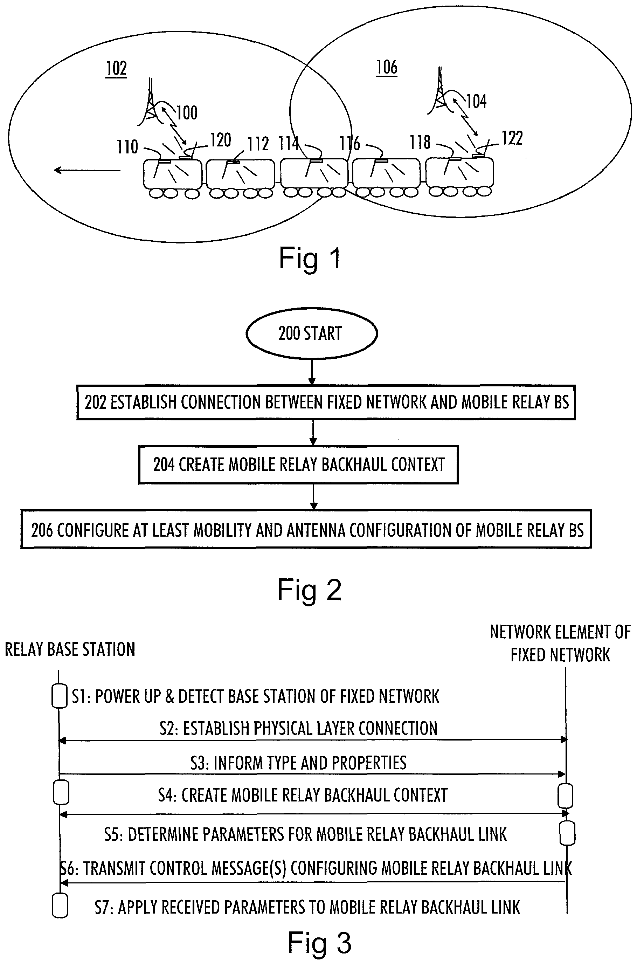

Figure 1 illustrates an example of a communication environment between a mobile terminal and a mobile telecommunication system. In the illustrated scenario, the relay base station is a mobile (or nomadic) base station installed in a train (or another mobile vehicle) and configured to relay cellular communication links between a fixed cellular network infrastructure and user terminals residing on the train. The mobile telecommunication system may be any mobile telecommunication system, e.g. any one of the evolution versions of UMTS (Universal Mobile Telecommunication System), GSM (Global System for Mobile communications) or another second generation system, WiMAX (Worldwide Interoperability for Microwave Access), or any other mobile telecommunication system. However, application of the mobile relay terminals according to embodiments of the invention to the Long-term Evolution (Advanced), LTE(-A), of the UMTS may be regarded as one of preferred embodiments.

The relay base station employs a distributed antenna system (DAS) comprising a plurality of distributed antenna units (DAU) 110 to 122 distributed throughout the train. The DAS is a network of spatially separated antenna nodes connected to a common source via a transport medium that provides wireless services within a geographic area or structure. DAS antenna elevations are generally at or below the clutter level, e.g. inside buildings or other structures, and DAU installations are compact, because each DAU includes an antenna and a little amount of electronics so as to transfer signals between the antenna and the common source located physically apart from the DAU. Historically, the DAS has been evolved from an initial idea of splitting transmission power among several antenna elements, separated in space so as to provide coverage over the same area as a single antenna but with a reduced total power and improved reliability. This idea works because less power is wasted in overcoming structure penetration and shadowing losses. Additionally, as a line-of-sight channel is present more frequently, the DAS leads to reduced fading depths and a reduced delay spread. The DAS can be implemented using passive splitters and feeders, or active-repeater amplifiers can be used to overcome the feeder losses. In systems where equalization is applied, it may be desirable to introduce delays between the antenna elements. This artificially increases delay spread in areas where multiple DAUs have an overlapping coverage, permitting quality improvements via time diversity. In general, the DAS can be used to provide uniform signal quality over a targeted coverage area, to reduce zoning issues, to minimize proliferation of antenna sites, to increase spectrum efficiency, to reduce CAPEX and OPEX, and/or to ensure a future-proof radio access network.

It should be noted that the DAS differs from a conventional multi-antenna array in the physical spacing of the antenna elements. In the multi-antenna array, the antenna spacing is in the order of a wavelength, e.g. half the wavelength, while the antenna spacing of the DAS is considerably higher than that, e.g. in the order of meters or dozens of meters. One or more DAUs of the DAS may include a multi-antenna array so as to enable MIMO (multiple-input-multiple-output) communication techniques. The DAS may also employ cooperative MIMO communication where multiple DAUs are logically coupled to exploit better diversity, spatial multiplexing, and/or beamforming. The cooperative MIMO differs from the basic MIMO in that the antennas are distributed over a larger area in the cooperative MIMO.

Let us assume that the train in Figure 1 has a length of 300 meters and ten train coaches. This train with a traveling speed varying from 10m/s to 100m/s may need about 3 seconds to 30 seconds to pass through a cell border. There may be a large number of users on board, even in the order of thousand. 1^{st} class cabins or coaches may have fewer users, whereas 2^{nd} class cabins may have a much higher user density. Hence, there are significant amounts of time and space provided to explore time-space diversities associated with such a moving relay system, together with user diversities resulted from service traffic demands and spatial distribution of mobile users on board. Providing a mobile relay base station on a train provides the user terminals in the train with a common access point, but the mobile relay base station with an antenna system disposed in a single point in the train may not provide sufficient capacity. This motivates us to consider utilizing the DAS together with the mobile relay base station, e.g. by providing at least one DAU per a train coach (DAUs 110 to 118) for serving as individual sub-cell(s) inside the coverage area of the mobile relay base station. Additionally, at least two DAUs 120 and 122 may be placed outside the train to provide a communication link with the fixed cellular network infrastructure represented by fixed base stations 100, 104 associated with cells 102, 106, respectively. One of the DAUs 120, 122 may be placed at the head of the train and the other at the end of the train for sufficient mobile backhaul link(s), i.e. links with the fixed cellular network infrastructure. The long distance between the backhaul DAUs 120, 122 provides time-space diversity between the backhaul DAUs 120, 122. Additionally, multiple logical backhaul links may be established in order to optimize backhaul link connection functionality, capacity and performance, high data-rate duplexing operation, connection control, and mobility management.

In order to enable and facilitate efficient deployment and operation of the mobile relay base station employing the DAS, there is a need for a configuration and control method introduced and incorporated into the fixed cellular network infrastructure and into the mobile relay base station itself.

Figure 2 illustrates a process for configuring the operation of the mobile relay base station including the DAS. The process is described on a general level, and the process may be carried out in a communication control circuitry applied to the mobile relay base station or to a network element of the fixed cellular network infrastructure. The process starts in block 200.

In block 202, a communication connection is established between a network element of a fixed cellular network infrastructure and a mobile relay base station comprising a DAS. The DAS comprises a plurality of spatially distributed antenna units (DAUs), wherein at least some of the DAUs are used for forming a cluster of sub-cells within a coverage area of the mobile relay base station and at least some of the DAUs are used for communicating with the fixed cellular network infrastructure. The DAUs used for forming the cluster of sub-cells communicate with user terminals located in the coverage area of the DAS. The DAS may include at least one DAU which is used to communicate with both the fixed cellular network infrastructure and with user terminals.

In block 204, a mobile backhaul radio link context is created for use in configuration of the mobile relay base station. The mobile backhaul radio link context comprises parameters used for controlling at least mobility and distributed antenna configuration of the mobile relay base station. In block 206, operation of the mobile relay base station is configured through transfer of control messages between the mobile relay base station and the fixed cellular network infrastructure over the mobile backhaul radio link context.

Embodiments of the present invention focus on the backhaul link between the mobile relay base station and the fixed cellular network infrastructure. The mobile relay base station multiplexes user data received from the served user terminals to the logical backhaul link(s). Similarly, the mobile relay base station demultiplexes user data received through the logical backhaul link(s) to corresponding user connections.

The mobile relay backhaul context comprises parameters and information elements associated with the backhaul link. As indicated above, the mobile relay backhaul context is created in the mobile relay base station and in the network element (or in multiple elements) of the fixed cellular network. The mobile relay backhaul context is then used when configuring the operation of the backhaul link, i.e. the link between the mobile relay base station and one or more base stations of the fixed cellular network. The network element configuring the operation of the backhaul link may be the base station with which the mobile relay base station communicates. Some parameters of the backhaul link may, however, be controlled by another network element, e.g. an operation and maintenance server controlling higher level parameters of the cellular network and also defined in the 3GPP specifications for the UMTS LTE.

Figure 3 is a signaling diagram illustrating a procedure for initiating the establishment of the backhaul link, creating the mobile relay backhaul context, and configuring the operation of the mobile relay base station. In Figure 3, the signaling is carried out between a mobile relay base station and a network element of the fixed cellular network. The network element may be a fixed base station or another network element, depending on a communication level. For example, link level communication and control may be carried out with the base station of the fixed network but higher layer communication and control may be carried out with another network element. Therefore, the term network element' should be interpreted broadly and depending on the context.

In S1, the mobile relay base station is powered up. After powering up, the mobile relay base station searches for a closest base station of the fixed cellular network and establishes a physical layer connection with a detected base station in S2. As a consequence, the mobile relay base station establishes higher layer connections with other elements of the fixed cellular network, e.g. with the operation and maintenance server, a mobility management entity, etc. In S3, the mobile relay base station informs the fixed cellular network about its type identity and properties. The type identity defines that the relay base station is a mobile relay base station equipped with the DAS so that the network element may create appropriate context for controlling the backhaul. The mobile relay base station may also indicate the maximum number of DAUs it can use for the backhaul link, physical dimensions of these DAUs, e.g. their spacing and/or longest distance between two backhaul link DAUs. The mobile relay base station may also indicate the maximum speed of the mobile relay base station. These parameters may be preconfigured and stored in a memory unit of the mobile relay base station.

In S4, the mobile relay base station and the network element(s) of the fixed cellular network create the mobile relay backhaul context for use in the configuration and control of the backhaul link. The context defines the parameters necessary for operating the backhaul link, and S4 may include communication and transfer of configuration messages between the fixed network and the mobile relay base station. In practice, the fixed network assigns at least one of the following: one or more identifiers to the mobile relay base station (cellular radio network temporary identifiers, C-RNTI, for example), the number of logical parallel backhaul links to be created and a reference signal for each logical backhaul link, one or more timers to be used in connection with handover and/or radio link failure, and initial allocation of backhaul DAUs to the backhaul links. The creation of the mobile relay backhaul context may be understood as higher level configuration of the backhaul link.

Steps S5 to S7 comprise dynamic link level configuration of the backhaul link during the operation. The network element(s) determine parameters for the backhaul link in S6, transmit one or more control messages configuring the backhaul link in S6, and the mobile relay base station applies the parameters contained in the received control message(s) to the backhaul link in S7. Steps S5 to S7 may include dynamic scheduling of backhaul resources, dynamic (re)allocation of DAUs to logical backhaul link(s), (de)activation of DAUs, handover control, addition/deletion of logical backhaul links, (re)allocation of cellular identifiers and unique reference signals.

As mentioned above, the network element may be configured to assign the number of logical backhaul links on the basis of the number of backhaul DAUs in the DAS of the mobile relay base station. Additionally, the network element may consider the availability of backhaul link communication resources and current capacity of the backhaul link(s) in view of the traffic in the backhaul link(s). The traffic requirements may be determined on the basis of the status of buffers (the mobile relay base station may indicate its buffer status to the network). If the network element discovers that the backhaul link is congested and that there are available backhaul link resources and an available backhaul DAU in the DAS, it may configure a new backhaul link for the mobile relay base station. The network element may transmit a control message to the mobile relay base station configuring the mobile relay base station to create a new backhaul link. Upon reception of the control message, the mobile relay base station negotiates the generation of the new backhaul link with the serving base station of the fixed cellular network. Similarly, the network element may decide to remove a logical backhaul link, if the amount of traffic is so low that all the backhaul links are not necessary and/or if backhaul link resources are needed elsewhere. The reconfiguration of the backhaul links may also be initiated by the mobile relay base station by transmitting a request for addition/removal of a backhaul link. The number of backhaul links supported is a matter of design, and the present invention is not limited to any number of backhaul links. The different backhaul links may be connected to different base stations of the cellular network. The different base stations may be base stations of different operators or different base stations of the same operator. The fixed network may see DAUs associated with the different backhaul links as different sub-systems, and the different control functions of these sub-systems may be carried out separately and/or jointly for different sub-systems, as described in this specification.
Allocating a plurality of DAUs to the same logical backhaul link also enables duplexing where one or more DAUs are dedicated for transmitting and other one or more DAUs are dedicated for receiving through the logical backhaul link. In general, full duplexing may be implemented in a form where the mobile relay base station operates the backhaul link and access links (links between the mobile relay base station and user terminals) simultaneously on the same frequency band. As described in other parts of the description, some of the DAUs may be dedicated to provide the access links while other DAUs, isolate sufficiently from the access link DAUs, may be dedicated to provide the backhaul links, and both links may be operated simultaneously on the same band, and full duplexing is enabled in both backhaul and access links.
The network element may also determine the number of backhaul DAUs assigned to each logical backhaul link and precise allocation of the backhaul DAUs to each logical backhaul link. In an embodiment, the network element groups DAUs close to each other to the same logical backhaul link so as to apply the same transmission control to the grouped distributed antenna units. In this embodiment, the same timing advance (defining transmission timing offset in uplink transmission) and transmit power control may be applied to all DAUs in the same group. In another embodiment, the network element groups DAUs far from each other to the same logical backhaul connection so as to utilize spatial diversity for improving connection quality of the logical backhaul link. Then, the network element may configure the mobile relay base station to apply cooperative MIMO in the form of spatial multiplexing or beamforming, or diversity transmission to improve data rate and/or reliability of the backhaul link. The number of DAUs in a logical backhaul link may be up to four, which enables the mobile relay base stations to be applied to current LTE systems with a low impact on Layer 1 specifications. Current LTE specifications support up to four antennas in a user terminal, and the mobile relay base station emulates many functionalities of the user terminal in the backhaul link. Therefore, the current LTE Layer 1 specification may be modified to accommodate mobile relay base stations with DAS with little effort.
With respect to scheduling transmission/reception of the backhaul link, each backhaul link is associated with an identifier, as mentioned above. Additionally, each DAU may have a unique identifier and/or a common identifier common to a plurality of DAUs. Furthermore, the different backhaul links may be assigned a common identifier to enable common addressing of the multiple backhaul links. The network element (fixed base station) may now schedule communication resources by indicating a scheduled entity by using the identifiers. When the base station schedules resources to an identifier of the backhaul link, the mobile relay base station configures all the backhaul DAUs associated with the logical backhaul link to operate (to transmit/receive). When the base station schedules resources to a common identifier of multiple backhaul links, the mobile relay base station configures all the backhaul DAUs associated with those multiple logical backhaul links to operate (to transmit/receive). When the base station schedules resources to an identifier of a given backhaul DAU, the mobile relay base station configures that backhaul DAU to operate (to transmit/receive). When the base station schedules resources to an identifier common to a plurality of backhaul DAUs, the mobile relay base station configures all the backhaul DAUs associated with the common identifier to operate (to transmit/receive). This provides versatility to the backhaul scheduling, and the base station may utilize different scheduling schemes on the basis of channel state, traffic requirements, etc.
Since the DAUs are separated from each other, they experience different communication channels. This may be taken into account in reporting channel state (or quality) indicators, CSIs, to the fixed network. The mobile relay base station may measure the channel states for each DAU from pilot signals transmitted by the fixed base station and neighboring base stations and received at different DAUs and determine a CSI for each DAU. Then, the mobile relay base station may send the CSIs to the fixed base station so that the fixed base station may determine the channel state in each DAU. The CSIs of different DAUs may be sent in a single measurement report, or the mobile relay base station may generate a separate message for each CSI. The fixed base station (or another network element) may use the CSIs in reallocation of the DAUs, handover, etc. A different uplink reference signal may be assigned to different backhaul links, as mentioned above but, additionally, a different uplink reference signal may also be assigned to each DAU so that the fixed network may separately determine uplink channel states of different DAUs.

As mentioned above, the mobile relay base station may indicate the distance between the different backhaul DAUs and the maximum speed of the vehicle on which the mobile relay base station is employed to the network element, e.g. a fixed base station. This may be utilized in connection with handover when the mobile relay base station has established a plurality of logical backhaul links. Let us assume that a first logical backhaul link is established from a first backhaul DAU at the head of a train and a second logical backhaul link is established from a second backhaul DAU at the end of the train, as illustrated in Figure 1. Referring to a signaling diagram of Figure 3, the fixed base station receives measurement reports from the mobile relay base station in S11. The measurement reports indicate the channel quality the different DAUs of the mobile relay base station experience with different neighboring base stations. In S12, the base station determines that the first logical backhaul link of the mobile relay base station should be handed over to a neighboring target base station. As a consequence, the base station may determine that the second logical backhaul link will also be handed over to the target base station regardless of what the current measurement reports indicate. Since both logical backhaul links are associated with the same mobile relay base station, it is probable that the measurement reports of the second logical backhaul link will soon indicate the need for handover. In S13, the base station triggers the handover of the first logical backhaul link to the target base station. In preparation for the handover, the base station may have already transferred the mobile relay backhaul context to the target base station so that the target base station may continue controlling the backhaul links handed over. In S14, the base station starts a timer counting a time duration proportional to the degree of spatial distribution (distance) between the DAUs of the first and second logical backhaul connections. The maximum speed of the vehicle may also be taken into account when determining the time duration. Upon expiry of the timer, the base station in S15 automatically triggers the handover of the second logical backhaul link to the target base station. Again, the base station may have already transferred the mobile relay backhaul context to the target base station in the preparation for the handover. This embodiment reduces the computational burden in the network element deciding the handovers, because it does not have to determine the need for handover separately for the different backhaul links associated with the same mobile relay base station. The triggering of handover for the first backhaul link automatically results in the second backhaul link being handed over to the same target base station after the expiry of the timer.

In another embodiment, a second collective timer is utilized to delay handover of all handovers of the logical backhaul links of the mobile relay base station. The collective timer may be used to delay the handovers, for example, when the target base station is congested and not yet ready for serving the mobile relay base station. The handover of all backhaul links may be delayed, or handover of some of the backhaul links (those handed over first) may be delayed. The collective timer may be included in the base station of the fixed network or in the mobile relay base station. In the embodiment where the collective timer is included in the fixed base station, the fixed base station may delay the handover commands starting the handover procedure of the first and second (and further) backhaul links. In the embodiment where the collective timer is included in the mobile relay base station, the mobile relay base station may delay its response to the handover commands starting the handover procedure of the first and second (and further) backhaul links. In this case, the collective timer applies to all backhaul links, i.e. the handovers of all backhaul links are delayed by the time counted by the collective timer.

In the above embodiments, the handover of the backhaul links is carried out separately but dependently on each other. In particular, the second handover is dependent on the first handover. In general, the different backhaul links may be handed over one-by-one, or multiple backhaul links may be handed over simultaneously. The manner in which the handover is carried out may depend on the DAU allocation, for example. If two backhaul links utilize DAUs that are located relatively close to each other, it may be reasonable to hand over both backhaul links simultaneously. If there are numerous backhaul links, the backhaul links may be handed over one-by-one, group-by-group or all at once.
In physical layer communications, the mobile relay base station emulates in many aspect functionalities of a user terminal in uplink communications towards the fixed cellular network infrastructure. For example, scheduling, some multi-antenna transmission techniques, and mobility management (handover) may in principle be carried out as they are carried out for the user terminal. Naturally, the fixed network is able to discriminate the mobile relay base station from user terminals and, thus, the network may allocate substantially more communication resources to the mobile relay base station than to a user terminal. Similarly, the mobile relay base station emulates on the physical layer the functionalities of a base station of the fixed network infrastructure in downlink communications towards user terminals served by the mobile relay base station. As a consequence, the user terminals see the mobile relay base station as a conventional base station, and no additional modifications are needed in the user terminal to communicate with the mobile relay base station.

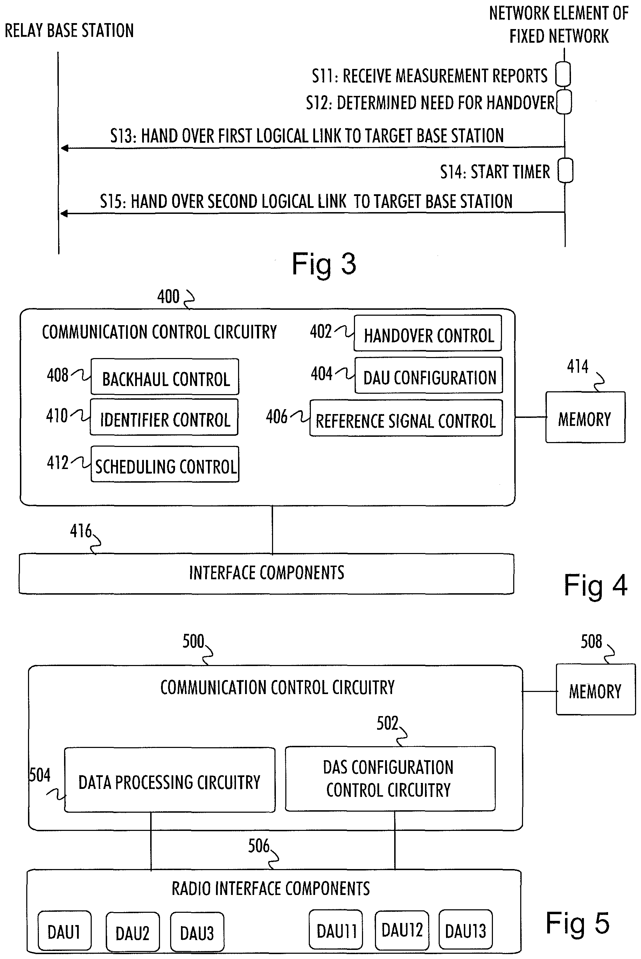

Figure 4 illustrates an exemplary block diagram of an apparatus according to an embodiment of the invention. The apparatus may be applied to a network element of the fixed cellular network infrastructure according to an embodiment of the invention. The network element may be the base station of the fixed cellular network or another network element, as described above. The network element comprises interface components 416 enabling establishment of a communication connection with mobile relay base stations operating in the coverage area of the fixed cellular network. The structure and functionalities of the interface components 416 depend on the type of the network element. If the network element is the base station, the interface components 416 may include radio interface components enabling communication over a radio interface and other interface components enabling establishment of wired connections to other parts of the cellular network and to other networks. If the network element is an operation and maintenance server, the interface components 416 may include components enabling establishment of wired connections to other parts of the cellular network, e.g. an Internet protocol (IP) connection.

The network element further comprises a communication control circuitry 400 controlling the backhaul links established with the mobile relay base stations. The communication control circuitry 400 may include several subcircuitries controlling different parameters of the backhaul links. A handover control circuitry 402 may analyze measurements reports received from the mobile relay base stations and control handovers of the mobile relay base stations. The handover control circuitry 402 may also control handovers of user terminals.

A DAU configuration circuitry 404 may control allocation of backhaul DAUs of the mobile relay base stations. The DAU configuration circuitry 404 may control activation and deactivation of the DAUs and addition/removal of DAUs to/from backhaul links. The DAU configuration circuitry 404 may also control the manner in which multiple DAUs of the same backhaul link communicate (cooperative MIMO, diversity, beamforming, etc.). A reference signal control circuitry 406 may control assignment of reference signals to backhaul links and/or to individual DAUs. A backhaul control circuitry 408 may control the number of backhaul links for each mobile relay base station, as described above. An identifier control circuitry 410 may control assignment and reassignment of identifiers to the backhaul links and to individual backhaul DAUs. A scheduling control circuitry 412 may control scheduling of communication resources to the mobile relay base stations.

The control circuitries 402 to 412 may be implemented as logically and/or physically separate devices or entities. Some of the control circuitries may be included in the base station, while other control circuitries may be included in other parts of the network. Therefore, it should be understood that the present invention is not limited to a physical network element comprising all the control circuitries of Figure 4. One or more circuitries may, however, be implemented by the same physical processor but as different logical operations defined by different computer program modules, for example.

The network element further comprises a memory unit 414 storing computer programs executed in the control circuitries 400 to 412. Additionally, the memory unit 414 may store parameters and information elements relevant to the mobile relay backhaul contexts and their configuration. The parameters relevant to the backhaul context have been listed above. The memory unit 414 may store a database comprising the identifiers and the reference signals the network element may allocate and information on available identifiers and reference signals. The memory unit 414 may also store several other types of information necessary for the operation of the network element.

Figure 5 illustrates an exemplary block diagram of another apparatus according to an embodiment of the invention. The apparatus may be applied to a mobile relay base station according to an embodiment of the invention. The mobile relay base station may include radio interface components 506 enabling establishment of radio connections with user terminals in a coverage area of the mobile relay base station and one or more backhaul radio links with fixed base stations having the mobile relay base station residing in their coverage area. The radio interface components 506 comprise a DAS comprising a plurality of DAUs. Some of the DAUs may be dedicated to communicate with user terminals while some of the DAUs may be dedicated to communicate with the fixed cellular network over the backhaul links. However, at least some of the DAUs may be configured to communicate with both user terminals and the fixed cellular network. If the radiation pattern of a given DAU is configured to enable a sufficient coverage area in a sub-cell associated with the DAU and a connection with a serving fixed base station, the DAU may be configured to employ both types of links.

The mobile relay base station further comprises a communication control circuitry 500 configured to control the radio links established by the mobile relay base station. The communication control circuitry 500 may communicate with the fixed cellular network in order to create and operate the mobile relay backhaul context, as described above. As a consequence, the communication control circuitry may receive from the fixed cellular network control messages defining the configuration of the backhaul links and apply the configurations contained in the received control messages. The communication control circuitry 500 may comprise a data processing circuitry 504 configured to convey data packets of user terminals between the backhaul links and user terminal interface connections. The data processing circuitry 504 may be implemented in a manner similar to that used in connection with conventional relay base stations.

The communication control circuitry may also comprise a DAS configuration control circuitry 502 configured to control the configuration of the DAS and individual DAUs directly. The DAS configuration control circuitry 502 may operate under the control of the communication control circuitry 500 by adapting the configuration of the DAS according to control information received from the communication control circuitry. With respect to the backhaul DAUs, the DAS configuration circuitry 502 may control the number of active backhaul DAUs, the assignment of backhaul DAUs to logical backhaul links (as defined in the received control messages), and transmission/reception of data and control signals through different DAUs as scheduled by the fixed base station. The DAS configuration control circuitry may additionally control other above-described parameters of the DAUs.

The network element further comprises a memory unit 508 storing computer programs executed in the communication control circuitry 500. Additionally, the memory unit 508 may store parameters and information elements relevant to the mobile relay backhaul contexts and their configuration. The memory unit 508 may also store several other types of information necessary for the operation of the mobile relay base station.
As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory (or memories) that work together to cause an apparatus to perform various functions, and (c) circuits, such as a microprocessor(s) or a portion of a microprocessor(s), that require software or firmware for operation, even if the software or firmware is not physically present. This definition of "circuitry" applies to all uses of this term in this application. As a further example, as used in this application, the term "circuitry" would also cover an implementation of merely a processor (or multiple processors) or a portion of a processor and its (or their) accompanying software and/or firmware.
The processes or methods described in connection with Figures 2 and 3 may also be carried out in the form of a computer process defined by a computer program. The computer program may be in source code form, object code form, or in some intermediate form, and it may be stored in some sort of carrier, which may be any entity or device capable of carrying the program. Such carriers include a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units.
The present invention is applicable not only to the cellular or mobile telecommunication systems defined above but also to other suitable telecommunication systems. The cellular telecommunication system may have a fixed infrastructure providing wireless services to user terminals. The protocols used, the specifications of mobile telecommunication systems, their network elements and subscriber terminals, develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. The invention and its embodiments are not limited to the examples described above, the scope of the present invention is defined by the appended claims.

## Claims

1. A method performed by a network element of a fixed cellular network infrastructure, the method comprising:
establishing (202) a communication connection with a mobile relay base station comprising a distributed antenna system comprising a plurality of spatially distributed antenna units (110, 112, 114, 116, 118, 120, 122), wherein at least part of the spatially distributed antenna units (110, 112, 114, 116, 118) are used for forming a cluster of sub-cells within a coverage area of the mobile relay base station and at least part of the spatially distributed antenna units (120, 122) are used for communicating with the fixed cellular network infrastructure over one or more backhaul links;
creating (204) a mobile relay backhaul radio link context for use in configuration of the mobile relay base station, wherein the mobile backhaul radio link context comprises parameters used for controlling the allocation of the spatially distributed antenna units to the one or more backhaul links of the mobile relay base station and parameters used for controlling handover of said one or more backhaul links between base stations of the fixed cellular network infrastructure; and
configuring (206) operation of one or more backhaul radio links of the mobile relay base station by transferring control messages with the mobile relay base station.

2. The method of claim 1, further comprising:
establishing at least two backhaul links between the mobile relay base station and the fixed cellular network infrastructure, wherein at least partly different spatially distributed antenna units are used for the two backhaul links;
multiplexing user data to the at least two backhaul links.

3. The method of claim 2, further comprising: assigning different identifiers to the at least two backhaul links.

4. The method of claim 2 or 3, further comprising: assigning a common identifier to a plurality of backhaul links so as to address the plurality of backhaul links jointly.

5. The method of any preceding claim 2 to 4, further comprising: changing the number of distributed antenna units communicating over the same backhaul links.

6. The method of any preceding claim 2 to 5, further comprising: configuring the at least two backhaul links to be associated with different base stations of the fixed cellular network infrastructure.

7. The method of any preceding claim 2 to 6, further comprising: determining, in the creation of the mobile relay backhaul radio link context an identity of the mobile relay base station and at least one of the following parameters of the mobile relay base station: a number of distributed antenna units in the distributed antenna system, a metric indicative of physical dimensions of the distributed antenna system, and a metric indicative of a maximum speed of the mobile relay base station.

8. The method of any preceding claim 2 to 7, further comprising: determining a degree of spatial distribution between distributed antenna units of a first and a second backhaul link;
handing (S13) over the first backhaul link from a source base station of the fixed cellular network infrastructure to a target base station of the fixed cellular network infrastructure;
starting (S14) a timer counting a time duration proportional to the degree of spatial distribution between the distributed antenna units of different backhaul links; and handing (S15) over the second backhaul link from the source base station to the target base station upon expiry of the timer.

9. An apparatus for a network element of a fixed cellular network infrastructure, comprising:
a communication control circuitry (400) configured to establish a communication connection between the network element and a mobile relay base station comprising a distributed antenna system comprising a plurality of spatially distributed antenna units (110, 112, 114, 116, 118, 120, 122), wherein at least part of the spatially distributed antenna units (110, 112, 114, 116, 118)are used for forming a cluster of sub-cells within a coverage area of the mobile relay base station and at least part of the spatially distributed antenna units (120, 122) are used for communicating with the fixed cellular network infrastructure over one or more backhaul links, to create a mobile backhaul radio link context for use in configuration of the mobile relay base station, wherein the mobile backhaul radio link context comprises parameters used for controlling the allocation of the spatially distributed antenna units to the one or more backhaul links of the mobile relay base station and parameters used for controlling handover of said one or more backhaul links between base stations of the fixed cellular network infrastructure, and to configure operation of the mobile relay base station by transferring control messages with the mobile relay base station .

10. The apparatus of claim 9, wherein the communication control circuitry is further configured to establish at least two backhaul links between the mobile relay base station and the fixed cellular network infrastructure, wherein at least partly different spatially distributed antenna units are used for the two backhaul links.

11. The apparatus of claim 10, wherein the communication control circuitry is further configured to assign different identifiers to the at least two backhaul links.

12. The apparatus of claim 10 or 11, wherein the communication control circuitry is further configured to assign a common identifier to a plurality of backhaul links so as to address the plurality of backhaul links jointly.

13. The apparatus of any preceding claim 10 to 12, wherein the communication control circuitry is further configured to change the number of distributed antenna units communicating over the same backhaul links.

14. The apparatus of any preceding claim 10 to 13, wherein the communication control circuitry is further configured to configure the at least two backhaul links to be associated with different base stations of the fixed cellular network infrastructure.

15. The apparatus of any preceding claim 9 to 14, wherein the communication control circuitry is further configured to determine, in the creation of the mobile relay backhaul radio link context an identity of the mobile relay base station and at least one of the following parameters of the mobile relay base station: a number of distributed antenna units in the distributed antenna system, a metric indicative of physical dimensions of the distributed antenna system, and a metric indicative of a maximum speed of the mobile relay base station.

16. The apparatus of any preceding claim 10 to 15, wherein the apparatus is applicable to the network element of the fixed cellular network infrastructure and is further configured to determine a degree of spatial distribution between distributed antenna units of a first and a second backhaul link, to hand over the first backhaul link from a source base station of the fixed cellular network infrastructure to a target base station of the fixed cellular network infrastructure, to start a timer counting a time duration proportional to the degree of spatial distribution between the between distributed antenna units of different backhaul links, and to hand over the second backhaul link from the source base station to the target base station upon expiry of the timer.

17. A method, comprising:
establishing (202), by a mobile relay base station comprising a distributed antenna system comprising a plurality of spatially distributed antenna units (110, 112, 114, 116, 118, 120, 122), a communication connection with a network element of a fixed cellular network infrastructure, wherein at least part of the spatially distributed antenna units (110, 112, 114, 116, 118) are used for forming a cluster of sub-cells within a coverage area of the mobile relay base station and at least part of the spatially distributed antenna units (120, 122) are used for communicating with the fixed cellular network infrastructure over one or more backhaul links;
creating (204), by the mobile relay base station, a mobile relay backhaul radio link context for use in configuration of the mobile relay base station, wherein the mobile backhaul radio link context comprises parameters used for controlling the allocation of the spatially distributed antenna units to the one or more backhaul links of the mobile relay base station and parameters used for controlling handover of said one or more backhaul links between base stations of the fixed cellular network infrastructure; and
configuring (206), by the mobile relay base station, operation of the mobile relay base station by transferring control messages with the network element.

18. An apparatus for a mobile relay base station comprising a distributed antenna system comprising a plurality of spatially distributed antenna units (110, 112, 114, 116, 118, 120, 122), wherein at least part of the spatially distributed antenna units (110, 112, 114, 116, 118) are configurable to form a cluster of sub-cells within a coverage area of the mobile relay base station and at least part of the spatially distributed antenna units (120, 122) are configurable for communicating with the fixed cellular network infrastructure over one or more backhaul links, comprising:
a communication control circuitry (500) configured to establish a communication connection with a network element of a fixed cellular network infrastructure,
to create a mobile backhaul radio link context for use in configuration of the mobile relay base station, wherein the mobile backhaul radio link context comprises parameters used for controlling the allocation of the spatially distributed antenna units to the one or more backhaul links of the mobile relay base station and parameters used for controlling handover of said one or more backhaul links between base stations of the fixed cellular network infrastructure, and
to configure operation of the mobile relay base station by transferring control messages with the network element.

## Patentansprüche

1. Verfahren, das durch ein Netzelement einer festen zellularen Netzinfrastruktur ausgeführt wird, wobei das Verfahren Folgendes umfasst:
Einrichten (202) einer Kommunikationsverbindung mit einer Mobil-Relais-Basisstation, die ein verteiltes Antennensystem umfasst, das mehrere räumlich verteilte Antenneneinheiten (110, 112, 114, 116, 118, 120, 122) umfasst, wobei zumindest ein Teil der räumlich verteilten Antenneneinheiten (110, 112, 114, 116, 118) verwendet wird, um einen Cluster von Unterzellen innerhalb eines Abdeckungsbereichs der Mobil-Relais-Basisstation zu bilden, und zumindest ein Teil der räumlich verteilten Antenneneinheiten (120, 122) verwendet wird, um mit der festen zellularen Netzinfrastruktur über eine oder mehrere Rückstreckenverbindungen zu kommunizieren;
Erzeugen (204) eines Mobil-Relais-Rückstreckenfunkverbindungskontextes für eine Verwendung in einer Konfiguration der Mobil-Relais-Basisstation, wobei der Mobilrückstreckenfunkverbindungskontext Parameter, die verwendet werden, um die Zuteilung der räumlich verteilten Antenneneinheiten zu der einen oder den mehreren Rückstreckenverbindungen der Mobil-Relais-Basisstation zu steuern, und Parameter, die verwendet werden, um die Übergabe der einen oder der mehreren Rückstreckenverbindungen zwischen Basisstationen der festen zellularen Netzinfrastruktur zu steuern, umfasst; und
Konfigurieren (206) eines Betriebs einer oder mehrerer Rückstreckenfunkverbindungen der Mobil-Relais-Basisstation durch Übertragen von Steuernachrichten mit der Mobil-Relais-Basisstation.

2. Verfahren nach Anspruch 1, das ferner Folgendes umfasst:
Einrichten mindestens zweier Rückstreckenverbindungen zwischen der Mobil-Relais-Basisstation und der festen zellularen Netzinfrastruktur, wobei die zumindest teilweise verschiedenen räumlich verteilten Antenneneinheiten für die beiden Rückstreckenverbindungen verwendet werden;
gleichzeitiges Senden von Anwenderdaten an die mindestens zwei Rückstreckenverbindungen.

3. Verfahren nach Anspruch 2, das ferner Folgendes umfasst: Zuweisen verschiedener Kennungen zu den mindestens zwei Rückstreckenverbindungen.

4. Verfahren nach Anspruch 2 oder 3, das ferner Folgendes umfasst: Zuweisen einer gemeinsamen Kennung zu mehreren Rückstreckenverbindungen, um die mehreren Rückstreckenverbindungen gemeinsam anzusprechen.

5. Verfahren nach einem vorhergehenden Anspruch 2 bis 4, das ferner Folgendes umfasst: Ändern der Anzahl von verteilten Antenneneinheiten, die über dieselben Rückstreckenverbindungen kommunizieren.

6. Verfahren nach einem vorhergehenden Anspruch 2 bis 5, das ferner Folgendes umfasst: Konfigurieren der mindestens zwei Rückstreckenverbindungen so, dass sie verschiedenen Basisstationen der festen zellularen Netzinfrastruktur zugeordnet sind.

7. Verfahren nach einem vorhergehenden Anspruch 2 bis 6, das ferner Folgendes umfasst: Bestimmen in der Erzeugung des Mobil-Relais-Rückstreckenfunkverbindungskontextes einer Identität der Mobil-Relais-Basisstation und mindestens eines der folgenden Parameter der Mobil-Relais-Basisstation: einer Anzahl von verteilten Antenneneinheiten in dem verteilten Antennensystem, einer Metrik, die physikalische Dimensionen des verteilten Antennensystems angibt, und einer Metrik, die eine maximale Geschwindigkeit der Mobil-Relais-Basisstation angibt.

8. Verfahren nach einem vorhergehenden Anspruch 2 bis 7, das ferner Folgendes umfasst: Bestimmen eines Grads einer räumlichen Verteilung zwischen verteilten Antenneneinheiten einer ersten und einer zweiten Rückstreckenverbindung;
Übergeben (S13) der ersten Rückstreckenverbindung von einer Quellbasisstation der festen zellularen Netzinfrastruktur an eine Zielbasisstation der festen zellularen Netzinfrastruktur;
Starten (S14) eines Zeitgebers, der eine Zeitdauer zählt, die proportional zu dem Grad der räumlichen Verteilung zwischen den verteilten Antenneneinheiten verschiedener Rückstreckenverbindungen ist; und Übergeben (S15) der zweiten Rückstreckenverbindung von der Quellbasisstation an die Zielbasisstation beim Ablaufen des Zeitgebers.

9. Vorrichtung für ein Netzelement einer festen zellularen Netzinfrastruktur, die Folgendes umfasst:
eine Kommunikationssteuerschaltung (400), die konfiguriert ist, eine Kommunikationsverbindung zwischen dem Netzelement und einer Mobil-Relais-Basisstation einzurichten, die ein verteiltes Antenennsystem umfasst, das mehrere räumlich verteilte Antenneneinheiten (110, 112, 114, 116, 118, 120, 122) umfasst, wobei zumindest ein Teil der räumlich verteilten Antenneneinheiten (110, 112, 114, 116, 118) verwendet wird, um einen Cluster von Unterzellen innerhalb eines Abdeckungsbereichs der Mobil-Relais-Basisstation zu bilden, und zumindest ein Teil der räumlich verteilten Antenneneinheiten (120, 122) verwendet wird, um mit der festen zellularen Netzinfrastruktur über eine oder mehrere Rückstreckenverbindungen zu kommunizieren, einen Mobil-Relais-Rückstreckenfunkverbindungskontext für eine Verwendung in einer Konfiguration der Mobil-Relais-Basisstation zu erzeugen, wobei der Mobilrückstreckenfunkverbindungskontext Parameter, die verwendet werden, um die Zuteilung der räumlich verteilten Antenneneinheiten zu der einen oder den mehreren Rückstreckenverbindungen der Mobil-Relais-Basisstation zu steuern, und Parameter, die verwendet werden, um die Übergabe der einen oder der mehreren Rückstreckenverbindungen zwischen Basisstationen der festen zellularen Netzinfrastruktur zu steuern, umfasst, und einen Betrieb der Mobil-Relais-Basisstation durch Übertragen von Steuernachrichten mit der Mobil-Relais-Basisstation zu konfigurieren.

10. Vorrichtung nach Anspruch 9, wobei die Kommunikationssteuerschaltung ferner konfiguriert ist, mindestens zwei Rückstreckenverbindungen zwischen der Mobil-Relais-Basisstation und der festen zellularen Netzinfrastruktur einzurichten, wobei die zumindest teilweise verschiedenen räumlich verteilten Antenneneinheiten für die beiden Rückstreckenverbindungen verwendet werden.

11. Vorrichtung nach Anspruch 10, wobei die Kommunikationssteuerschaltung ferner konfiguriert ist, den mindestens zwei Rückstreckenverbindungen verschiedene Kennungen zuzuweisen.

12. Vorrichtung nach Anspruch 10 oder 11, wobei die Kommunikationssteuerschaltung ferner konfiguriert ist, mehreren Rückstreckenverbindungen eine gemeinsame Kennung zuzuweisen, um die mehreren Rückstreckenverbindungen gemeinsam anzusprechen.

13. Vorrichtung nach einem vorhergehenden Anspruch 10 bis 12, wobei die Kommunikationssteuerschaltung ferner konfiguriert ist, die Anzahl von verteilten Antenneneinheiten, die über dieselben Rückstreckenverbindungen kommunizieren, zu ändern.

14. Vorrichtung nach einem vorhergehenden Anspruch 10 bis 13, wobei die Kommunikationssteuerschaltung ferner konfiguriert ist, die mindestens zwei Rückstreckenverbindungen so zu konfigurieren, dass sie verschiedenen Basisstationen der festen zellularen Netzinfrastruktur zugeordnet sind.

15. Vorrichtung nach einem vorhergehenden Anspruch 9 bis 14, wobei die Kommunikationssteuerschaltung ferner konfiguriert ist, in der Erzeugung des Mobil-Relais-Rückstreckenfunkverbindungskontextes eine Identität der Mobil-Relais-Basisstation und mindestens einen der folgenden Parameter der Mobil-Relais-Basisstation zu bestimmen: eine Anzahl von verteilten Antenneneinheiten in dem verteilten Antennensystem, eine Metrik, die physikalische Dimensionen des verteilten Antennensystems angibt, und eine Metrik, die eine maximale Geschwindigkeit der Mobil-Relais-Basisstation angibt.

16. Vorrichtung nach einem vorhergehenden Anspruch 10 bis 15, wobei die Vorrichtung auf das Netzelement der festen zellularen Netzinfrastruktur anwendbar ist und ferner konfiguriert ist, einen Grad einer räumlichen Verteilung zwischen verteilten Antenneneinheiten einer ersten und einer zweiten Rückstreckenverbindung zu bestimmen, die erste Rückstreckenverbindung von einer Quellbasisstation der festen zellularen Netzinfrastruktur an eine Zielbasisstation der festen zellularen Netzinfrastruktur zu übergeben, einen Zeitgeber zu starten, der eine Zeitdauer zählt, die proportional zu dem Grad der räumlichen Verteilung zwischen den verteilten Antenneneinheiten verschiedener Rückstreckenverbindungen ist, und die zweite Rückstreckenverbindung von der Quellbasisstation an die Zielbasisstation beim Ablaufen des Zeitgebers zu übergeben.

17. Verfahren, das Folgendes umfasst:
Einrichten (202) durch eine Mobil-Relais-Basisstation, die ein verteiltes Antennensystem umfasst, das mehrere räumlich verteilte Antenneneinheiten (110, 112, 114, 116, 118, 120, 122) umfasst, einer Kommunikationsverbindung mit einem Netzelement einer festen zellularen Netzinfrastruktur, wobei zumindest ein Teil der räumlich verteilten Antenneneinheiten (110, 112, 114, 116, 118) verwendet wird, um einen Cluster von Unterzellen innerhalb eines Abdeckungsbereichs der Mobil-Relais-Basisstation zu bilden, und zumindest ein Teil der räumlich verteilten Antenneneinheiten (120, 122) verwendet wird, um mit der festen zellularen Netzinfrastruktur über eine oder mehrere Rückstreckenverbindungen zu kommunizieren;
Erzeugen (204) durch die Mobil-Relais-Basisstation eines Mobil-Relais-Rückstreckenfunkverbindungskontextes für eine Verwendung in einer Konfiguration der Mobil-Relais-Basisstation, wobei der Mobilrückstreckenfunkverbindungskontext Parameter, die verwendet werden, um die Zuteilung der räumlich verteilten Antenneneinheiten zu der einen oder den mehreren Rückstreckenverbindungen der Mobil-Relais-Basisstation zu steuern, und Parameter, die verwendet werden, um die Übergabe der einen oder der mehreren Rückstreckenverbindungen zwischen Basisstationen der festen zellularen Netzinfrastruktur zu steuern, umfasst; und
Konfigurieren (206) durch die Mobil-Relais-Basisstation eines Betriebs der Mobil-Relais-Basisstation durch Übertragen von Steuernachrichten mit dem Netzelement.

18. Vorrichtung für eine Mobil-Relais-Basisstation, die ein verteiltes Antennensystem umfasst, das mehrere räumlich verteilte Antenneneinheiten (110, 112, 114, 116, 118, 120, 122) umfasst, wobei zumindest ein Teil der räumlich verteilten Antenneneinheiten (110, 112, 114, 116, 118) verwendet wird, um einen Cluster von Unterzellen innerhalb eines Abdeckungsbereichs der Mobil-Relais-Basisstation zu bilden, und zumindest ein Teil der räumlich verteilten Antenneneinheiten (120, 122) verwendet wird, um mit der festen zellularen Netzinfrastruktur über eine oder mehrere Rückstreckenverbindungen zu kommunizieren, die Folgendes umfasst:
eine Kommunikationssteuerschaltung (500), die konfiguriert ist, eine Kommunikationsverbindung mit einem Netzelement einer festen zellularen Netzinfrastruktur einzurichten,
einen Mobil-Relais-Rückstreckenfunkverbindungskontext für eine Verwendung in einer Konfiguration der Mobil-Relais-Basisstation zu erzeugen, wobei der Mobilrückstreckenfunkverbindungskontext Parameter, die verwendet werden, um die Zuteilung der räumlich verteilten Antenneneinheiten zu der einen oder den mehreren Rückstreckenverbindungen der Mobil-Relais-Basisstation zu steuern, und Parameter, die verwendet werden, um die Übergabe der einen oder der mehreren Rückstreckenverbindungen zwischen Basisstationen der festen zellularen Netzinfrastruktur zu steuern, umfasst; und
einen Betrieb der Mobil-Relais-Basisstation durch Übertragen von Steuernachrichten mit dem Netzelement zu konfigurieren.

## Revendications

1. Procédé mis en œuvre par un élément de réseau d'une infrastructure de réseau cellulaire fixe, le procédé comprenant :
l'établissement (202) d'une connexion de communication avec une station de base relais mobile comprenant un système d'antennes distribuées comprenant une pluralité d'unités d'antennes distribuées spatialement (110, 112, 114, 116, 118, 120, 122), au moins une partie des unités d'antennes distribuées spatialement (110, 112, 114, 116, 118) étant utilisée pour former une grappe de sous-cellules à l'intérieur d'une zone de couverture de la station de base relais mobile et au moins une partie des unités d'antennes distribuées spatialement (120, 122) étant utilisée pour communiquer avec l'infrastructure de réseau cellulaire fixe sur une ou plusieurs liaisons terrestres ;
la création (204) d'un contexte de liaison radio terrestre de relais mobile destiné à être utilisé dans la configuration de la station de base relais mobile, le contexte de liaison radio terrestre mobile comprenant des paramètres utilisés pour commander l'allocation des unités d'antennes distribuées spatialement aux une ou plusieurs liaisons terrestres de la station de base relais mobile et des paramètres utilisés pour commander le transfert desdites une ou plusieurs liaisons terrestres entre des stations de base de l'infrastructure de réseau cellulaire fixe ; et
la configuration (206) d'un fonctionnement d'une ou de plusieurs liaisons radio terrestres de la station de base relais mobile par transfert de messages de commande avec la station de base relais mobile.

2. Procédé selon la revendication 1, comprenant en outre :
l'établissement d'au moins deux liaisons terrestres entre la station de base relais mobile et l'infrastructure de réseau cellulaire fixe, des unités d'antenne distribuées spatialement au moins partiellement différentes étant utilisées pour les deux liaisons terrestres ;
le multiplexage de données d'utilisateur vers les au moins deux liaisons terrestres.

3. Procédé selon la revendication 2, comprenant en outre : l'assignation de différents identifiants aux au moins deux liaisons terrestres.

4. Procédé selon la revendication 2 ou 3, comprenant en outre :
l'assignation d'un identifiant commun à une pluralité de liaisons terrestres de manière à adresser conjointement la pluralité de liaisons terrestres.

5. Procédé selon n'importe quelle revendication précédente 2 à 4, comprenant en outre :
la modification du nombre d'unités d'antenne distribuées communiquant sur les mêmes liaisons terrestres.

6. Procédé selon n'importe quelle revendication précédente 2 à 5, comprenant en outre :
la configuration des au moins deux liaisons terrestres pour les associer à différentes stations de base de l'infrastructure de réseau cellulaire fixe.

7. Procédé selon n'importe quelle revendication précédente 2 à 6, comprenant en outre : la détermination, dans la création du contexte de liaison radio terrestre de relais mobile d'une identité de la station de base relais mobile et d'au moins un des paramètres suivants de la station de base relais mobile : un nombre d'unités d'antennes distribuées dans le système d'antennes distribuées, une métrique indicative de dimensions physiques du système d'antennes distribuées, et une métrique indicative d'une vitesse maximale de la station de base relais mobile.

8. Procédé selon n'importe quelle revendication précédente 2 à 7, comprenant en outre : la détermination d'un degré de distribution spatiale entre des unités d'antennes distribuées d'une première et d'une seconde liaison terrestre ;
le transfert (S13) de la première liaison terrestre d'une station de base source de l'infrastructure de réseau cellulaire fixe à une station de base cible de l'infrastructure de réseau cellulaire fixe ;
le lancement (S14) d'une minuterie comptant une durée de temps proportionnelle au degré de distribution spatiale entre les unités d'antennes distribuées de différentes liaisons terrestres ; et le transfert (S15) de la seconde liaison terrestre de la station de base source à la station de base cible à l'expiration de la minuterie.

9. Appareil pour un élément de réseau d'une infrastructure de réseau cellulaire fixe, comprenant :
une circuiterie de commande de communication (400) configurée pour établir une connexion de communication entre l'élément de réseau et une station de base relais mobile comprenant un système d'antennes distribuées comprenant une pluralité d'unités d'antennes distribuées spatialement (110, 112, 114, 116, 118, 120, 122), au moins une partie des unités d'antennes distribuées spatialement (110, 112, 114, 116, 118) étant utilisée pour former une grappe de sous-cellules à l'intérieur d'une zone de couverture de la station de base relais mobile et au moins une partie des d'antennes distribuées spatialement (120, 122) étant utilisée pour communiquer avec l'infrastructure de réseau cellulaire fixe sur une ou plusieurs liaisons terrestres, créer un contexte de liaison radio terrestre de relais mobile destiné à être utilisé dans la configuration de la station de base relais mobile, le contexte de liaison radio terrestre mobile comprenant des paramètres utilisés pour commander l'allocation des unités d'antennes distribuées spatialement aux une ou plusieurs liaisons terrestres de la station de base relais mobile et des paramètres utilisés pour commander le transfert desdites une ou plusieurs liaisons terrestres entre des stations de base de l'infrastructure de réseau cellulaire fixe, et configurer un fonctionnement de la station de base relais mobile par transfert de messages de commande avec la station de base relais mobile.

10. Appareil selon la revendication 9, dans lequel la circuiterie de commande de communication est configurée en outre pour établir au moins deux liaisons terrestres entre la station de base relais mobile et l'infrastructure de réseau cellulaire fixe, dans lequel des unités d'antenne distribuées spatialement au moins partiellement différentes sont utilisées pour les deux liaisons terrestres.

11. Appareil selon la revendication 10, dans lequel la circuiterie de commande de communication est configurée en outre pour assigner des identifiants différents aux au moins deux liaisons terrestres.

12. Appareil selon la revendication 10 or 11, dans lequel la circuiterie de commande de communication est configurée en outre pour assigner un identifiant commun à une pluralité de liaisons terrestres de manière à adresser conjointement la pluralité de liaisons terrestres.

13. Appareil selon la revendication n'importe quelle revendication précédente 10 à 12, dans lequel la circuiterie de commande de communication est configurée en outre pour modifier le nombre d'unités d'antennes distribuées communiquant sur les mêmes liaisons terrestres.

14. Appareil selon n'importe quelle revendication précédente 10 à 13, dans lequel la circuiterie de commande est configurée en outre pour configurer les au moins deux liaisons terrestres pour les associer à différentes stations de base de l'infrastructure de réseau cellulaire fixe.

15. Appareil selon n'importe quelle revendication précédente 9 à 14, dans lequel la circuiterie de commande de communication est configurée en outre pour déterminer, dans la création du contexte de liaison radio terrestre de relais mobile une identité de la station de base relais mobile et au moins un des paramètres suivants de la station de base relais mobile : un nombre d'unités d'antennes distribuées dans le système d'antennes distribuées, une métrique indicative de dimensions physiques du système d'antennes distribuées, et une métrique indicative d'une vitesse maximale de la station de base relais mobile.

16. Appareil selon n'importe quelle revendication précédente 10 à 15, l'appareil étant applicable à l'élément de réseau de l'infrastructure de réseau cellulaire fixe et configuré en outre pour déterminer un degré de distribution spatiale entre des unités d'antennes distribuées d'une première et d'une seconde liaison terrestre, transférer la première liaison terrestre d'une station de base source de l'infrastructure de réseau cellulaire fixe à une station de base cible de l'infrastructure de réseau cellulaire fixe, lancer une minuterie comptant une durée de temps proportionnelle au degré de distribution partiale entre les unités d'antennes distribuées de différentes liaisons terrestres, et transférer la seconde liaison terrestre de la station de base source à la station de base cible à l'expiration de la minuterie.

17. Procédé, comprenant :
l'établissement (202), par une station de base relais mobile comprenant un système d'antennes distribuées comprenant une pluralité d'unités d'antennes distribuées spatialement (110, 112, 114, 116, 118, 120, 122), d'une connexion de communication avec un élément de réseau d'une infrastructure de réseau cellulaire fixe, au moins une partie des d'antennes distribuées spatialement (110, 112, 114, 116, 118) étant utilisée pour former une grappe de sous-cellules à l'intérieur d'une zone de couverture de la station de base relais mobile et au moins une partie des d'antennes distribuées spatialement (120, 122) étant utilisée pour communiquer avec l'infrastructure de réseau cellulaire fixe sur une ou plusieurs liaisons terrestres ;
la création (204), par la station de base relais mobile, d'un contexte de liaison radio terrestre de relais mobile destiné à être utilisé dans la configuration de la station de base relais mobile, le contexte de liaison radio terrestre mobile comprenant des paramètres utilisés pour commander l'allocation des unités d'antennes distribuées spatialement aux une ou plusieurs liaisons terrestres de la station de base relais mobile et des paramètres utilisés pour commander le transfert desdites une ou plusieurs liaisons terrestres entre des stations de base de l'infrastructure de réseau cellulaire fixe ; et
la configuration (206), par la station de base relais mobile, d'un fonctionnement de la station de base relais mobile en transférant des messages de commande avec l'élément de réseau.

18. Appareil pour une station de base relais mobile comprenant un système d'antennes distribuées comprenant une pluralité d'unités d'antennes distribuées spatialement (110, 112, 114, 116, 118, 120, 122), au moins une partie des unités d'antennes distribuées spatialement (110, 112, 114, 116, 118) étant configurable pour former une grappe de sous-cellules à l'intérieur d'une zone de couverture de la station de base relais mobile et au moins une partie des unités d'antennes distribuées spatialement (120, 122) étant configurable pour communiquer avec l'infrastructure de réseau cellulaire fixe sur une ou plusieurs liaisons terrestres, comprenant :
une circuiterie de commande de communication (500) configurée pour établir une connexion de communication avec un élément de réseau d'une infrastructure de réseau cellulaire fixe,
créer un contexte de liaison radio terrestre mobile destiné à être utilisé dans la configuration de la station de base relais mobile, le contexte de liaison radio terrestre mobile comprenant des paramètres utilisés pour commander l'allocation des unités d'antennes distribuées spatialement aux une ou plusieurs liaisons terrestres de la station de base relais mobile et des paramètres utilisés pour commander le transfert desdites une ou plusieurs liaisons terrestres entre des stations de base de l'infrastructure de réseau cellulaire fixe, et
configurer un fonctionnement de la station de base relais mobile en transférant des messages de commande avec l'élément de réseau.
